# EUROPEAN PATENT APPLICATION

(11) **EP 4 699 839 A1**
(43) Date of publication of application: **25.02.2026**
(21) Application number: 24936477.9
(22) Date of filing: 21.05.2024
(51) Int. Cl.: B60K 6/10

(54) **POWER SYSTEM AND AUTOMOBILE**

(30) Priority: 22.04.2024 CN 202410481928
(71) Applicant: Chery Automobile Co., Ltd., Wuhu, Anhui 241006 (CN)
(72) Inventor: HAN, Yanyan, Wuhu, Anhui 241006 (CN); ZHOU, Zhiguang, Wuhu, Anhui 241006 (CN); YE, Yuanlong, Wuhu, Anhui 241006 (CN); GAN, Shenglin, Wuhu, Anhui 241006 (CN); DONG, Qixin, Wuhu, Anhui 241006 (CN)
(74) Representative: Yang, Shu
(86) International application number: PCT/CN2024/094495
(87) International publication number: WO 2025/222577

(57) **Abstract**

The present application relates to the technical field of automobile power, and discloses a power system and an automobile. The power system comprises a reduction axle, a differential, a flywheel, and a driving motor. The reduction axle and the differential are located on the same side of the flywheel. The reduction axle comprises a first section and a second section, the first section is connected to the second section, the driving motor and the flywheel each are transmittingly connected to the first section, and the first section is farther away from the driving motor than the second section. The differential comprises a first output gear and a housing, the first output gear is transmittingly connected to the housing and the second section, the orthographic projection of one end of the housing on a first projection plane is located in the orthographic projection of the flywheel on the first projection plane, and the first projection plane is a plane perpendicular to the length direction of the housing. In the power system of the present application, by arranging one end of the housing of the differential at the position where the first projection plane coincides with the flywheel, the difference in distance between two ends of the housing and respective wheels is reduced, that is, the lengths of two half shafts are close, thus reducing abnormal noise and vibration generated during operating.

## Description

The present disclosure claims priority to Chinese Patent Application No. 202410481928.X, filed on April 22, 2024, and entitled "POWER SYSTEM AND VEHICLE", the entire content of which is incorporated herein by reference.

### TECHNICAL FIELD

The present disclosure relates to the field of vehicle power technologies, and in particular, relates to a power system and a vehicle.

### BACKGROUND

A vehicle is a common means of transportation.

A vehicle generally includes a power source and an output mechanism. The power source can output power to the output mechanism.

In the related art, the power source, when outputting power to the output mechanism, needs to pass through a large number of transmission components, which may lead to degraded noise, vibration, and harshness (NVH) performance and reduced handling stability of the vehicle.

### SUMMARY

Embodiments of the present disclosure provide a power system and a vehicle to improve the NVH performance and the handling stability. The technical solutions are described as follows.

In an aspect, the present disclosure provides a power system. The power system includes a reduction shaft, a differential, a flywheel, and a driving motor.

The reduction shaft and the differential are disposed on the same side of the flywheel.

The reduction shaft includes a first section and a second section, wherein the first section is connected to the second section, the driving motor and the flywheel are drivingly connected to the first section, and the first section is farther from the driving motor than the second section.

The differential includes a first output gear and a housing, wherein the first output gear is drivingly connected to the housing and the second section, and an orthographic projection of one end of the housing on a first projection plane is within an orthographic projection of the flywheel on the first projection plane, the first projection plane being a plane perpendicular to a length direction of the housing.

Optionally, the first section is provided with a first reduction gear, and the second section is provided with a second reduction gear, wherein the first reduction gear is drivingly connected to the driving motor and the flywheel, respectively, and the second reduction gear meshes with the first output gear.

Optionally, the driving motor includes a first input shaft and a first input gear, wherein the first input gear is sleeved on the first input shaft and drivingly connected to the first input shaft, and the first input gear meshes with the first reduction gear.

Optionally, the first input shaft is provided with a bearing, wherein the bearing is sleeved on the first input shaft, and an orthographic projection of the bearing on a second projection plane is separated from an orthographic projection of the flywheel on the second projection plane, the second projection plane being a plane perpendicular to a width direction of the housing.

Optionally, the power system includes a second input shaft and a second input gear, wherein both the second input gear and the flywheel are sleeved on the second input shaft and drivingly connected to the second input shaft, and the second input gear meshes with the second reduction gear.

Optionally, the power system includes a generator, wherein the generator is drivingly connected to the second input shaft.

Optionally, the generator is provided with a second output gear, and the power system includes a third input gear, wherein the third input gear is sleeved on the second input shaft and drivingly connected to the second input shaft, and the third input gear meshes with the second output gear.

Optionally, the power system includes a clutch, wherein the second input gear is capable of rotating relative to the second input shaft, the second input shaft is capable of driving the third input gear to rotate, and the clutch connects the second input gear and the third input gear.

Optionally, an orthographic projection of the flywheel on a third projection plane partially overlaps with an orthographic projection of the reduction shaft on the third projection plane, the third projection plane being a plane perpendicular to the width direction of the housing.

In another aspect, the present disclosure provides a vehicle. The vehicle includes a power system. The power system includes a reduction shaft, a differential, a flywheel, and a driving motor.

The reduction shaft and the differential are disposed on the same side of the flywheel.

The reduction shaft includes a first section and a second section, wherein the first section is connected to the second section, the driving motor and the flywheel are drivingly connected to the first section, and the first section is farther from the driving motor than the second section.

The differential includes a first output gear and a housing, wherein the first output gear is drivingly connected to the housing and the second section, and an orthographic projection of one end of the housing on a first projection plane being within an orthographic projection of the flywheel on the first projection plane, the first projection plane being a plane perpendicular to a length direction of the housing.

Optionally, the first section is provided with a first reduction gear, and the second section is provided with a second reduction gear, wherein the first reduction gear is drivingly connected to the driving motor and the flywheel, respectively, and the second reduction gear meshes with the first output gear.

Optionally, the driving motor includes a first input shaft and a first input gear, wherein the first input gear is sleeved on the first input shaft and drivingly connected to the first input shaft, and the first input gear meshes with the first reduction gear.

Optionally, the first input shaft is provided with a bearing, wherein the bearing is sleeved on the first input shaft, and an orthographic projection of the bearing on a second projection plane is separated from an orthographic projection of the flywheel on the second projection plane, the second projection plane being a plane perpendicular to a width direction of the housing.

Optionally, the power system includes a second input shaft and a second input gear, wherein both the second input gear and the flywheel are sleeved on the second input shaft and drivingly connected to the second input shaft, and the second input gear meshes with the second reduction gear.

Optionally, the power system includes a generator, wherein the generator is drivingly connected to the second input shaft.

The technical solutions provided by the embodiments of the present disclosure at least include the following beneficial effects: the reduction shaft can handle power from the driving motor, and in turn increase a torque and reduce a rotational speed of the driving motor, to adapt the power to operating conditions of the differential. The reduction shaft is connected to the driving motor through the first section and to the housing of the differential through the second section, which is beneficial to dispersing the weight of the power system according to the present disclosure and in turn improving the balance of the power system, thereby reducing abnormal noise and vibration caused when the power system is loaded onto the vehicle and improving the NVH performance and the handling stability. The orthographic projection of one end of the housing on the first projection plane is within the orthographic projection of the flywheel on the first projection plane, which is beneficial to making two ends of the housing in the width direction close to wheels, thereby improving the NVH performance and the handling stability.

### BRIEF DESCRIPTION OF DRAWINGS

To describe the technical solutions in the embodiments of the present disclosure more clearly, the following briefly introduces the accompanying drawings to be used in the description of the embodiments. Obviously, the accompanying drawings in the following description show merely some embodiments of the present disclosure, and a person skilled in the art may still derive other drawings from these accompanying drawings without creative effort.
FIG. 1 is a schematic structural diagram of a power system according to some embodiments of the present disclosure;
FIG. 2 is a schematic structural diagram of another power system according to some embodiments of the present disclosure;
FIG. 3 is a schematic side view of the power system according to some embodiments of the present disclosure; and
FIG. 4 is a schematic top view of the power system according to some embodiments of the present disclosure.

Reference numerals in the drawings respectively denote:
1. reduction shaft; 11. first section; 111. first reduction gear; 12. second section; 121. second reduction gear;
2. differential; 21. first output gear; 22. housing;
3. flywheel;
4. driving motor; 41. first input shaft; 411. bearing; 42. first input gear;
51. second input shaft; 52. second input gear; 53. third input gear;
6. generator; 61. second output gear;
7. clutch;
8. half shaft;
9. wheel.

### DETAILED DESCRIPTION

To make the objectives, technical solutions, and advantages of the present disclosure clearer, the embodiments of the present disclosure will be further described in detail below with reference to the accompanying drawings. Apparently, the described embodiments are only some, but not all of the embodiments of the present disclosure. All other embodiments acquired by those of ordinary skill in the art without creative efforts based on the embodiments in the present disclosure are within the protection scope of the present disclosure.

Unless otherwise defined, all technical terms used in the embodiments of the present disclosure shall have the same meanings as commonly understood by those skilled in the art.

For clearer descriptions of the technical solutions and advantages of the present disclosure, the embodiments of the present disclosure are described in detail hereinafter with reference to the accompanying drawings.

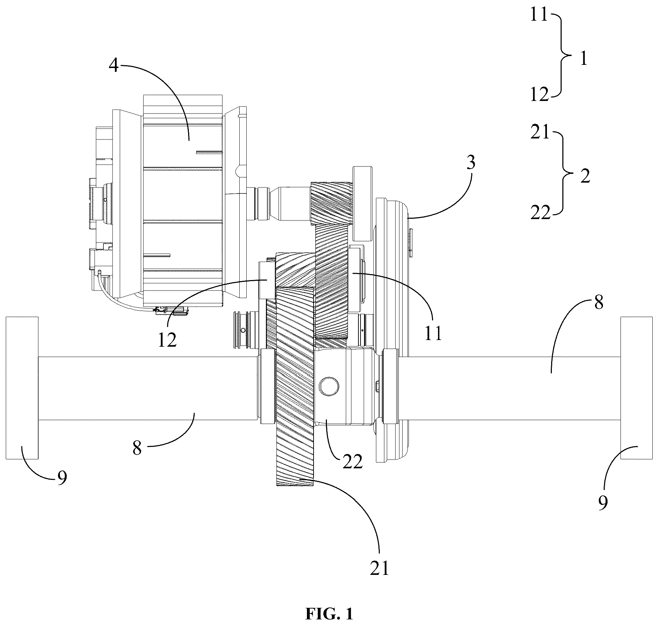

In a first aspect of the present disclosure, a power system is provided. As shown in FIG. 1, the power system includes a reduction shaft 1, a differential 2, a flywheel 3, and a driving motor 4.

The reduction shaft 1 and the differential 2 are disposed on the same side of the flywheel 3.

The reduction shaft 1 includes a first section 11 and a second section 12. The first section 11 is connected to the second section 12, the driving motor 4 and flywheel 3 are drivingly connected to the first section 11, and the first section 11 is farther from the driving motor 4 than the second section 12.

The differential 2 includes a first output gear 21 and a housing 22. The first output gear 21 is drivingly connected to the housing 22 and the second section 12. An orthographic projection of one end of the housing 22 on a first projection plane is within an orthographic projection of the flywheel 3 on the first projection plane, and the first projection plane is a plane perpendicular to a length direction of the housing 22.

It can be understood that the reduction shaft 1 can handle power from the driving motor 4 and in turn increase a torque and reduce a rotational speed of the driving motor, to adapt the power to operating conditions of the differential 2. The reduction shaft 1 is connected to the driving motor 4 through the first section 11 and to the housing 22 of the differential 2 through the second section 12, which is beneficial to dispersing the weight of the power system according to the present disclosure and in turn improving the balance of the power system, thereby reducing abnormal noise and vibration caused when the power system is loaded onto the vehicle and improving the NVH performance and the handling stability. The orthographic projection of one end of the housing 22 on the first projection plane is within the orthographic projection of the flywheel 3 on the first projection plane, which is beneficial to making two ends of the housing 22 in a width direction close to wheels 9, thereby improving the NVH performance and the handling stability.

In the embodiments of the present disclosure, the width direction of the housing 22 refers to a direction in which the two ends of the housing 22 are respectively connected to two half shafts 8.

In the embodiments of the present disclosure, the length direction of the housing 22 refers to a direction that is perpendicular to the width direction of the housing 22 and extends in a horizontal direction.

In the related art, a gearbox is generally not on a center line of the vehicle but biased towards one side of the vehicle body. Therefore, the two half shafts 8 of the vehicle are not of equal length. This unequal-length half shaft structure is prone to generating abnormal noise and vibration during normal operation, which not only shortens the service life of the power system but also affects the handling stability of a driver.

In the power system according to the present disclosure, the difference in length between the two ends of the housing 22 and the wheels 9 is reduced by providing one end of the housing 22 of the differential 2 at a position where the first projection plane overlaps with the flywheel 3, which is beneficial to making lengths of the two half shafts 8 close to each other and in turn reducing abnormal noise and vibration generated during operation.

In the embodiments of the present disclosure, the power system further includes an engine, and the reduction shaft 1 and the differential 2 are disposed on the same side of the flywheel 3.

In this way, the driving motor 4 and the engine may be arranged on two sides of the flywheel 3 to disperse the weight of the power system and in turn reduce abnormal noise and vibration caused by uneven weight distribution.

The flywheel 3 may be approximately a cylinder of which a diameter is greater than its height. A height direction of the flywheel 3 is parallel to its axis of rotation. The same side of the flywheel 3 may refer to a side that a bottom face of the flywheel 3 faces.

In the embodiments of the present disclosure, the first section 11 is connected to the second section 12.

The first section 11 and the second section 12 may be connected through an integrated molding process, for example, molded through casting, to transmit power from the engine and the driving motor 4, and may also be connected through a key connection and the like to transmit power from the engine and the driving motor 4. In an exemplary embodiment, the integrated molding process may also be welding or extrusion molding.

In the embodiments of the present disclosure, the driving motor 4 and the flywheel 3 are drivingly connected to the first section 11, respectively.

The driving motor 4 may be directly drivingly connected to the first section 11 to drive the first section 11 to operate, and may also be drivingly connected to the first section 11 through an intermediate component to drive the first section 11 to operate through the intermediate component.

The flywheel 3 being drivingly connected to the first section 11 may mean that both the flywheel and the first section are driven to operate by the same power source. In an exemplary embodiment, the flywheel 3 and the first section 11 may be simultaneously driven to operate by the same power source, or may be alternatively driven to operate by the power source.

In an exemplary embodiment, the power source may be an engine.

In the embodiments of the present disclosure, the first section 11 is farther from the driving motor 4 than the second section 12.

The first section 11 and the second section 12 are sequentially arranged in an axial direction of the reduction shaft 1, and the second section 12 is disposed between the first section 11 and the driving motor 4.

The first section 11 is drivingly connected to the driving motor 4, and the second section 12 is drivingly connected to the housing 22. With this arrangement, the differential 2 may be kept away from the flywheel 3 to a certain extent, making the overall weight of the power system according to the present disclosure relatively dispersed.

In the embodiments of the present disclosure, the housing 22 of the differential 2 in one aspect may be used to transmit a torque from the first output gear 21, and in another aspect may also be used to support and accommodate other components of the differential 2, such as a driving gear, a driven gear, and a planetary gear. In an exemplary embodiment, the housing 22 may accommodate the aforementioned other components by forming a hollow structure.

In the embodiments of the present disclosure, the first output gear 21 is drivingly connected to the housing 22 and the second section 12.

The first output gear 21 may drive the housing 22 to rotate through the second section 12, thereby achieving a driving connection between the housing 22 and the second section 12.

The first output gear 21 may be sleeved on an outer side of the housing 22, and is drivingly connected to the housing 22 through a fixed connection. The fixed connection may be a bolt connection.

The first output gear 21 and the second section 12 may be drivingly connected in a permanent meshing manner.

In the embodiments of the present disclosure, an orthographic projection of one end of the housing 22 on a first projection plane is within an orthographic projection of the flywheel 3 on the first projection plane.

An axis of the housing 22 and an axis of the wheel 9 need to be collinear, but due to a process error and other factors, there may be a certain deviation between the two axes in the height direction, and such a deviation reduces the NVH performance and the handling stability. Specifically, the deviation may affect the arrangement of the half shafts 8 that connect the housing 22 and the wheels 9, i.e., the housing 22 and the wheels 9 that are not collinear may cause the half shafts 8 to be in inclined states, which is not conducive to transmission of a torque from the housing 22 by the half shafts 8. The wheels 9 are generally distributed on two sides of the flywheel 3. The orthographic projection of one end of the housing 22 on the first projection plane is within the orthographic projection of the flywheel 3 on the first projection plane, which is beneficial to increasing the distance between the housing 22 and the wheels 9 on the side where the differential 2 is disposed. This helps reduce angles of inclination of the half shafts 8 and causes the half shafts 8 to transmit the torque from the housing 22, thereby improving the NVH performance and the handling stability.

In an exemplary embodiment, the width of the housing 22 may range from 150 mm to 170 mm. The width of the housing 22 may be 150 mm, 155 mm, 160 mm, 165 mm, 170 mm, or other values from 150 to 170 mm.

A side face of the flywheel 3 facing the engine is a generator-gearbox end face, i.e., a face where the engine and a gearbox are combined. The generator-gearbox end face is generally an origin of coordinates of the power system of the vehicle. This helps shorten the difference between the two half shafts 8 to improve the NVH performance.

Since the housing 22 is connected to the half shafts 8, and the position of connection is supported by a bearing 411, one end of the housing 22 may refer to a part of the housing 22 on which the bearing 411 is sleeved.

In the embodiments of the present disclosure, a width direction of the engine is parallel to an axial direction of the reduction shaft 1. Specifically, a direction in which the cylinder of the engine is arranged is parallel to the axial direction of the reduction shaft 1.

In the embodiments of the present disclosure, the differential 2 is used to adjust the torque applied to the two half shafts 8, thus enabling the vehicle to turn a corner and to recover from stuck conditions. In an exemplary embodiment, the differential 2 is an open differential 2.

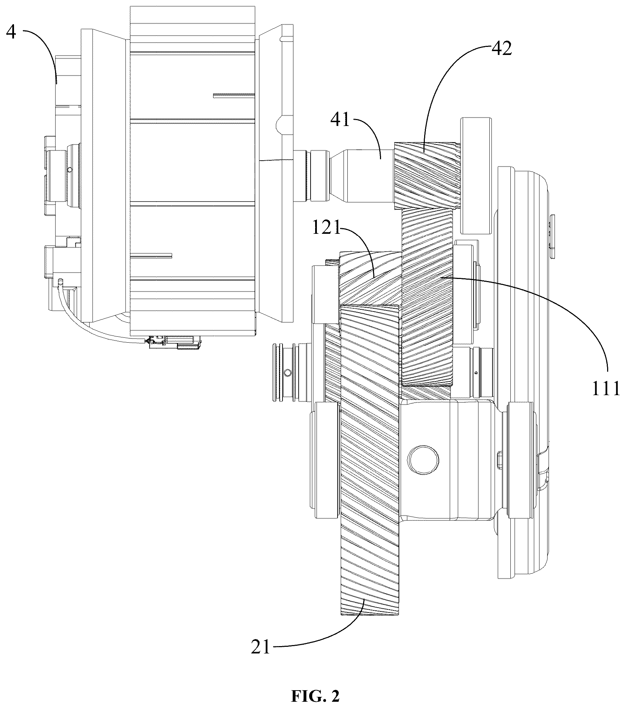

In some embodiments of the present disclosure, as shown in FIG. 2, the first section 11 is provided with a first reduction gear 111, and the second section 12 is provided with a second reduction gear 121. The first reduction gear 111 is drivingly connected to the driving motor 4 and the flywheel 3, respectively, and the second reduction gear 121 meshes with the first output gear 21.

In the embodiments of the present disclosure, the second reduction gear 121 meshes with the first output gear 21, which is beneficial for the second section 12 to drive the housing 22 to rotate by the second reduction gear 121 to transmit the torque from the second section 12, such that the differential 2 can operate normally. At the same time, by meshing with the first output gear 21, the second reduction gear 121 can reduce the rotational speed transmitted from the second section 12 to the differential 2, such that the torque applied to the differential 2 can be increased to drive the wheels 9 and the half shafts 8 to rotate.

In the embodiments of the present disclosure, the driving motor 4 may be drivingly connected to the first reduction gear 111 through methods such as meshing or key connection to drive the first reduction gear 111 to rotate, and may also be drivingly connected to the first reduction gear 111 through an intermediate component to drive the first reduction gear 111 to rotate.

In the embodiments of the present disclosure, the first reduction gear 111 is drivingly connected to the flywheel 3 through an intermediate component. Generally, the flywheel 3 indirectly drives the first reduction gear 111 to rotate by driving the intermediate component to rotate.

In the embodiments of the present disclosure, the first reduction gear 111 may be connected to the first section 11 through an integrated molding process, and may also be connected to the first section 11 through a key connection. In an exemplary embodiment, the integrated molding process may also be welding or extrusion molding.

In the embodiments of the present disclosure, the second reduction gear 121 may be connected to the second section 12 through an integrated molding process, and may also be connected to the second section 12 through a key connection. In an exemplary embodiment, the integrated forming process may also be welding or extrusion molding.

In some embodiments of the present disclosure, as shown in FIG. 2, the driving motor 4 includes a first input shaft 41 and a first input gear 42. The first input gear 42 is sleeved on the first input shaft 41 and drivingly connected to the first input shaft 41, and meshes with the first reduction gear 111.

In the embodiments of the present disclosure, the driving motor 4 meshes with the first reduction gear 111 through the first input gear 42 to achieve driving connection with the first section 11, and by driving the first input gear 42 to rotate, the driving motor 4 drives the first reduction gear 111 and the first section 11 to rotate, thereby driving the differential 2 to operate.

In the embodiments of the present disclosure, the first input gear 42 may be connected to the first input shaft 41 through an integrated molding process, and may also be connected to the first input shaft 41 through a key connection. The integrated molding process may also be casting, welding, or extrusion molding.

In the embodiments of the present disclosure, the first input shaft 41 may serve as a rotor shaft of the driving motor 4, and the driving motor 4 drives, by a magnetic field formed by a stator, the first input shaft 41 to rotate. The driving motor 4 may also be drivingly connected to the first input shaft 41 by the rotor shaft and in turn drive the first input shaft 41 to rotate by the rotor shaft. The rotor shaft and the first input shaft 41 may be connected through a spline connection or the like.

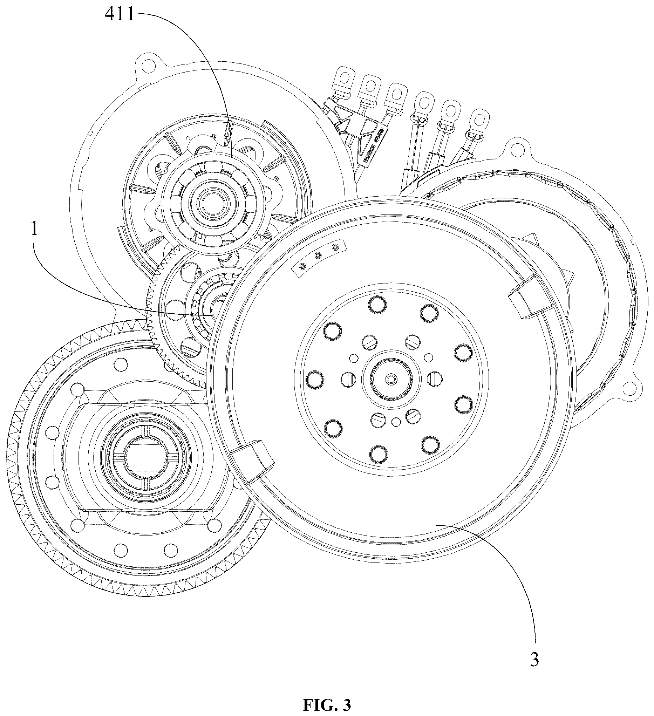

In some embodiments of the present disclosure, as shown in FIG. 3, the first input shaft 41 is provided with a bearing 411. The bearing 411 is sleeved on the first input shaft 41, an orthographic projection of the bearing 411 on a second projection plane is separated from an orthographic projection of the flywheel 3 on the second projection plane, and the second projection plane is a plane perpendicular to a length direction of the housing 22.

In the embodiments of the present disclosure, the orthographic projection of the bearing 411 on the second projection plane is separated from the orthographic projection of the flywheel 3 on the second projection plane, which is beneficial for the driving motor 4 to overlap with the flywheel 3 and the engine in a width direction of the power system according to the present disclosure, such that the width of the power system according to the present disclosure can be reduced.

In the embodiments of the present disclosure, the width direction of the power system is consistent with the width direction of the housing 22.

In the embodiments of the present disclosure, the bearing 411 may support the first input shaft 41 for rotation. An inner ring of the bearing 411 is connected to the first input shaft 41, and an outer ring of the bearing 411 may be connected to other components, such that the first input shaft 41 may rotate under the drive of the driving motor 4.

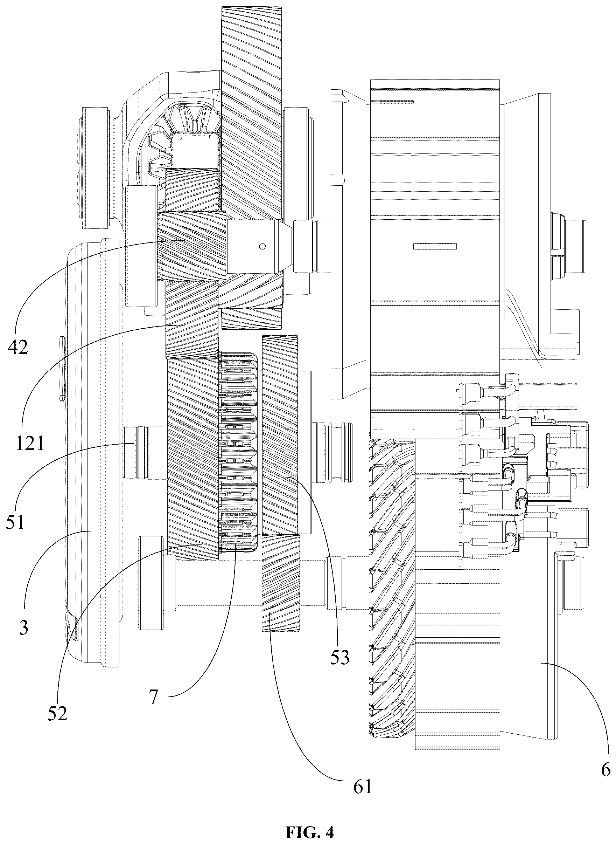

In some embodiments of the present disclosure, as shown in FIG. 4, the power system includes a second input shaft 51 and a second input gear 52. Both the second input gear 52 and the flywheel 3 are sleeved on the second input shaft 51 and drivingly connected to the second input shaft 51. The second input gear 52 meshes with the second reduction gear 121.

In the embodiments of the present disclosure, the flywheel 3 is drivingly connected to the second input shaft 51 and may drive the second input shaft 51 to rotate, such that the engine can be driven to start through the second input shaft 51.

In the embodiments of the present disclosure, the second input shaft 51 meshes with the second reduction gear 121 through the second input gear 52, and may drive the second reduction gear 121 to rotate and in turn drive the differential 2 to rotate. The second reduction gear 121 may also reduce the rotational speed transmitted by the second section 12 to the differential 2, such that the torque applied to the differential 2 can be increased to drive the wheels 9 and the half shafts 8 to rotate.

In the embodiments of the present disclosure, the second input shaft 51 may serve as a crankshaft of the engine to rotate under the drive of a piston, may also be drivingly connected to the crankshaft by a coupling and other structures, and in turn is driven by the piston.

In the embodiments of the present disclosure, the second input shaft 51 and the second input gear 52 may be connected through an integrated molding process, for example, molded through casting to transmit power from the engine, and may also be connected through a key connection and the like to transmit power from the engine. The integrated molding process may also be welding or extrusion molding.

In some embodiments of the present disclosure, as shown in FIG. 4, the power system includes a generator 6. The generator 6 is drivingly connected to the second input shaft 51.

In the embodiments of the present disclosure, the second input shaft 51 is drivingly connected to the generator 6, which is beneficial for the second input shaft 51 to output kinetic energy to the generator 6, such that the generator 6 can generate electricity for other components to operate.

In the embodiments of the present disclosure, the generator 6 may be directly drivingly connected to the second input shaft 51 through structures such as a key or a coupling, and rotate under the drive of the second input shaft 51 to generate electricity. The generator 6 may also be drivingly connected to the second input shaft by an intermediate component, and rotate under the drive of the second input shaft 51 to generate electricity.

In the embodiments of the present disclosure, the generator 6 may be electrically connected with the driving motor 4 and in turn directly applies electrical energy generated by power generation to the driving motor 4, such that the driving motor 4 can drive the differential 2 to operate.

In the embodiments of the present disclosure, the electrical energy generated by the generator 6 may also be stored in a power supply for other components to draw power during operation.

In some embodiments of the present disclosure, as shown in FIG. 4, the generator 6 is provided with a second output gear 61, and the power system includes a third input gear 53. The third input gear 53 is sleeved on the second input shaft 51 and drivingly connected to the second input shaft 51, and the third input gear 53 meshes with the second output gear 61.

In the embodiments of the present disclosure, the third input gear 53 meshes with the second output gear 61, such that the second input shaft 51 can drive the generator 6 to rotate, which is beneficial for the generator 6 to convert kinetic energy into electrical energy.

In the embodiments of the present disclosure, the third input gear 53 may be connected to the first section 11 through an integrated molding process, and may also be connected to the second input shaft 51 through a key connection. In an exemplary embodiment, the integrated molding process may also be welding or extrusion molding.

In the embodiment of the present disclosure, the number of teeth of the third input gear 53 is greater than the number of teeth of the second output gear 61, thereby increasing the kinetic energy applied to the generator 6 and improving the power generation efficiency.

In some embodiments of the present disclosure, as shown in FIG. 4, the power system includes a clutch 7, the second input gear 52 may rotate relative to the second input shaft 51, the second input shaft 51 may drive the third input gear 53 to rotate, and the clutch 7 connects the second input gear 52 and the third input gear 53.

In the embodiments of the present disclosure, since the generator 6 is drivingly connected to the second input shaft 51, the generator 6 may consume power output by the second input shaft 51 when generating electricity. At the same time, even if the generator 6 is not in operation, the output efficiency of the second input shaft 51 may also be reduced when the second input shaft 51 still drives the second output gear 61 to rotate. Connecting the second input gear 52 and the third input gear 53 through the clutch 7 is beneficial for the power system according to the present disclosure to choose, according to actual needs, to drive either the generator 6 or both the generator 6 and the second input shaft 51 to operate, which helps improve the output efficiency of the second input shaft 51.

When the clutch 7 is disengaged, the driving connection between the second input gear 52 and the third input gear 53 is cut off, and the second input shaft 51 may drive the third input gear 53 to rotate and to rotate relative to the second input gear 52. At this moment, the generator 6 converts the kinetic energy of the rotation into electrical energy, and the reduction shaft 1 cannot be driven by the second input shaft 51 to rotate.

When the clutch 7 is engaged, the driving connection between the second input gear 52 and the third input gear 53 is enabled, and the second input shaft 51 may drive the second input gear 52 and the third input gear 53 to rotate. At this moment, the generator 6 converts the kinetic energy of the rotation into electrical energy, and at the same time, the reduction shaft 1 is driven by the second input shaft 51 to rotate.

In the embodiments of the present disclosure, the second input gear 52 is sleeved on the second input shaft 51, and a bearing may be provided between the second input gear and the second input shaft 51, such that the second input gear 52 and the second input shaft 51 may rotate relative to each other. An inner ring of the bearing is connected to the second input shaft 51, and an outer ring of the bearing is connected to the second input gear 52. In this way, the second input shaft 51 may support the second input gear 52 while providing conditions for relative rotation between the second input gear 52 and the second input shaft 51.

In the embodiments of the present disclosure, the clutch 7 may be an electromagnetic clutch, a magnetic powder clutch, a hydraulic clutch, or other types of clutches.

In some embodiments of the present disclosure, as shown in FIG. 3, an orthographic projection of the flywheel 3 on a third projection plane partially overlaps with an orthographic projection of the reduction shaft 1 on the third projection plane, and the third projection plane is a plane perpendicular to the length direction of the housing 22.

In the embodiments of the present disclosure, the reduction shaft 1 is generally drivingly connected to the driving motor 4 and the flywheel 3 by the gears thereon, and thus, there are generally no other transmission components at the end portion of the reduction shaft 1. The orthographic projection of the flywheel 3 on the third projection plane partially overlaps with the orthographic projection of the reduction shaft 1 on the third projection plane, which not only avoids interference between the flywheel 3 and the reduction shaft 1, but also helps improve the compactness of the power system according to the present disclosure.

In a second aspect of the present disclosure, a vehicle is provided. The vehicle includes a power system. The power system includes a reduction shaft 1, a differential 2, a flywheel 3, and a driving motor 4.

The reduction shaft 1 and the differential 2 are disposed on the same side of the flywheel 3.

The reduction shaft 1 includes a first section 11 and a second section 12. The first section 11 is connected to the second section 12, the driving motor 4 and flywheel 3 are drivingly connected to the first section 11, and the first section 11 is farther from the driving motor 4 than the second section 12.

The differential 2 includes a first output gear 21 and a housing 22. The first output gear 21 is drivingly connected to the housing 22 and the second section 12, an orthographic projection of one end of the housing 22 on a first projection plane is within an orthographic projection of the flywheel 3 on the first projection plane, and the first projection plane is a plane perpendicular to a length direction of the housing 22.

It can be understood that the reduction shaft 1 can handle power from the driving motor 4 and in turn increase a torque and reduce a rotational speed of the driving motor, to adapt the power to operating conditions of the differential 2. The reduction shaft 1 is connected to the driving motor 4 through the first section 11 and to the housing 22 of the differential 2 through the second section 12, which is beneficial to dispersing the weight of the power system according to the present disclosure and in turn improving the balance of the power system, thereby reducing abnormal noise and vibration caused when the power system is loaded onto the vehicle and improving the NVH performance and the handling stability. The orthographic projection of one end of the housing 22 on the first projection plane is within the orthographic projection of the flywheel 3 on the first projection plane, which is beneficial to making two ends of the housing 22 in a width direction close to wheels 9, thereby improving the NVH performance and the handling stability.

In the embodiments of the present disclosure, the width direction of the housing 22 refers to a direction in which the two ends of the housing 22 are respectively connected to two half shafts 8.

In the embodiments of the present disclosure, the length direction of the housing 22 refers to a direction that is perpendicular to the width direction of the housing 22 and extends in a horizontal direction.

In the related art, a gearbox is generally not on a center line of the vehicle but biased towards one side of the vehicle body. Therefore, the two half shafts 8 of the vehicle are not of equal length. This unequal-length half shaft 8 structure is prone to generating abnormal noise and vibration during normal operation, which not only shortens the service life of the power system but also affects the handling stability of a driver.

In the power system according to the present disclosure, the difference in length between the two ends of the housing 22 and the wheels 9 is reduced by providing one end of the housing 22 of the differential 2 at a position where the first projection plane overlaps with the flywheel 3, which is beneficial to making lengths of the two half shafts 8 close to each other, thereby reducing abnormal noise and vibration generated during operation.

In the embodiments of the present disclosure, the power system further includes an engine, and the reduction shaft 1 and the differential 2 are disposed on the same side of the flywheel 3.

In this way, the driving motor 4 and the engine may be arranged on two sides of the flywheel 3 to disperse the weight of the power system and in turn reduce abnormal noise and vibration caused by uneven weight distribution.

The flywheel 3 may be approximately a cylinder of which a diameter is greater than its height. A height direction of the flywheel 3 is parallel to its axis of rotation. The same side of the flywheel 3 may refer to a side that a bottom face of the flywheel 3 faces.

In the embodiments of the present disclosure, the first section 11 is connected to the second section 12.

The first section 11 and the second section 12 may be connected through an integrated molding process, for example, molded through casting, to transmit power from the engine and the driving motor 4, and may also be connected through a key connection and the like to transmit power from the engine and the driving motor 4. In an exemplary embodiment, the integrated molding process may also be welding or extrusion molding.

In the embodiments of the present disclosure, the driving motor 4 and the flywheel 3 are drivingly connected to the first section 11.

The driving motor 4 may be directly drivingly connected to the first section 11 to drive the first section 11 to operate, and may also be drivingly connected to the first section 11 through an intermediate component to drive the first section 11 to operate through the intermediate component.

The flywheel 3 being drivingly connected to the first section 11 may mean that both the flywheel and the first section are driven to operate by the same power source. In an exemplary embodiment, the flywheel 3 and the first section 11 may be simultaneously driven to operate by the same power source, or may be alternatively driven to work by the power source.

In an exemplary embodiment, the power source may be an engine.

In the embodiments of the present disclosure, the first section 11 is farther from the driving motor 4 than the second section 12.

The first section 11 and the second section 12 are sequentially arranged in an axial direction of the reduction shaft 1, and the second section 12 is disposed between the first section 11 and the driving motor 4.

The first section 11 is drivingly connected to the driving motor 4, and the second section 12 is drivingly connected to the housing 22. With this arrangement, the differential 2 may be kept away from the flywheel 3 to a certain extent, making the overall weight of the power system according to the present disclosure relatively dispersed.

In the embodiments of the present disclosure, the housing 22 of the differential 2 in one aspect may be used to transmit a torque from the first output gear 21, and in another aspect may also be used to support and accommodate other components of the differential 2, such as a driving gear, a driven gear, and a planetary gear. In an exemplary embodiment, the housing 22 may accommodate the aforementioned other components by forming a hollow structure.

In the embodiments of the present disclosure, the first output gear 21 is drivingly connected to the housing 22 and the second section 12.

The first output gear 21 may drive the housing 22 to rotate through the second section 12, thereby achieving a driving connection between the housing 22 and the second section 12.

The first output gear 21 may be sleeved on an outer side of the housing 22, and is drivingly connected to the housing 22 through a fixed connection. The fixed connection may be a bolt connection.

The first output gear 21 and the second section 12 may be drivingly connected in a permanent meshing manner.

In the embodiments of the present disclosure, an orthographic projection of one end of the housing 22 on a first projection plane is within an orthographic projection of the flywheel 3 on the first projection plane.

An axis of the housing 22 and an axis of the wheel 9 need to be collinear, but due to a process error and other factors, there may be a certain deviation between the two axes in the height direction, and such a deviation reduces the NVH performance and the handling stability. Specifically, the deviation may affect the arrangement of the half shafts 8 that connect the housing 22 and the wheels 9, i.e., the housing 22 and the wheels 9 that are not collinear may cause the half shafts 8 to be in inclined states, which is not conducive to transmission of a torque from the housing 22 by the half shafts 8. The wheels 9 are generally distributed on two sides of the flywheel 3. The orthographic projection of one end of the housing 22 on the first projection plane is within the orthographic projection of the flywheel 3 on the first projection plane, which is beneficial to increasing the distance between the housing 22 and the wheels 9 on the side where the differential 2 is disposed. This helps reduce angles of inclination of the half shafts 8 and causes the half shafts 8 to transmit the torque from the housing 22, thereby improving the NVH performance and the handling stability.

In an exemplary embodiment, the width of the housing 22 may range from 150 mm to 170 mm. The width of the housing 22 may be 150 mm, 155 mm, 160 mm, 165 mm, 170 mm, or other values from 150 to 170 mm.

A side face of the flywheel 3 facing the engine is a generator-gearbox end face, i.e., a face where the engine and a gearbox are combined. The generator-gearbox end face is generally an origin of coordinates of the power system of the whole vehicle. This helps shorten the difference between the two half shafts 8 to improve the NVH performance.

Since the housing 22 is connected to the half shafts, and the position of connection is supported by a bearing 411, one end of the housing 22 may refer to a part of the housing 22 on which the bearing 411 is sleeved.

In the embodiments of the present disclosure, a width direction of the engine is parallel to an axial direction of the reduction shaft 1. Specifically, a direction in which the cylinder of the engine is arranged is parallel to the axial direction of the reduction shaft 1.

In the embodiments of the present disclosure, the differential 2 is used to adjust the torque applied to the two half shafts 8, thus enabling the vehicle to turn a corner and to recover from stuck conditions. In an exemplary embodiment, the differential 2 is an open differential 2.

In some embodiments of the present disclosure, as shown in FIG. 2, the first section 11 is provided with a first reduction gear 111, and the second section 12 is provided with a second reduction gear 121. The first reduction gear 111 is drivingly connected to the driving motor 4 and the flywheel 3, respectively, and the second reduction gear 121 meshes with the first output gear 21.

In the embodiments of the present disclosure, the second reduction gear 121 meshes with the first output gear 21, which is beneficial for the second section 12 to drive the housing 22 to rotate by the second reduction gear 121 to transmit the torque from the second section 12, such that the differential 2 can operate normally. At the same time, by meshing with the first output gear 21, the second reduction gear 121 can reduce the rotational speed transmitted from the second section 12 to the differential 2, such that the torque applied to the differential 2 can be increased to drive the wheels 9 and the half shafts 8 to rotate.

In the embodiments of the present disclosure, the driving motor 4 may be drivingly connected to the first reduction gear 111 through methods such as meshing or a key connection to drive the first reduction gear 111 to rotate, and may also be drivingly connected to the first reduction gear 111 through an intermediate component to drive the first reduction gear 111 to rotate.

In the embodiments of the present disclosure, the first reduction gear 111 is drivingly connected to the flywheel 3 through an intermediate component. Generally, the flywheel 3 indirectly drives the first reduction gear 111 to rotate by driving the intermediate component to rotate.

In the embodiments of the present disclosure, the first reduction gear 111 may be connected to the first section 11 through an integrated molding process, and may also be connected to the first section 11 through a key connection. In an exemplary embodiment, the integrated molding process may also be welding or extrusion molding.

In the embodiments of the present disclosure, the second reduction gear 121 may be connected to the second section 12 through an integrated molding process, and may also be connected to the second section 12 through a key connection. In an exemplary embodiment, the integrated molding process may also be welding or extrusion molding.

In some embodiments of the present disclosure, as shown in FIG. 2, the driving motor 4 includes a first input shaft 41 and a first input gear 42. The first input gear 42 is sleeved on the first input shaft 41 and drivingly connected to the first input shaft 41, and meshes with the first reduction gear 111.

In the embodiments of the present disclosure, the driving motor 4 meshes with the first reduction gear 111 through the first input gear 42 to achieve driving connection with the first section 11, and by driving the first input gear 42 to rotate, the driving motor 4 drives the first reduction gear 111 and the first section 11 to rotate, thereby driving the differential 2 to operate.

In the embodiments of the present disclosure, the first input gear 42 may be connected to the first input shaft 41 through an integrated molding process, and may also be connected to the first input shaft 41 through a key connection. The integrated molding process may also be casting, welding, or extrusion molding.

In the embodiments of the present disclosure, the first input shaft 41 may serve as a rotor shaft of the driving motor 4, and the driving motor 4 drives, by a magnetic field formed by a stator, the first input shaft 41 to rotate. The driving motor 4 may also be drivingly connected to the first input shaft 41 by the rotor shaft and in turn drive the first input shaft 41 to rotate by the rotor shaft. The rotor shaft and the first input shaft 41 may be connected through a spline connection or the like.

In some embodiments of the present disclosure, as shown in FIG. 3, the first input shaft 41 is provided with a bearing 411. The bearing 411 is sleeved on the first input shaft 41, an orthographic projection of the bearing 411 on a second projection plane is separated from an orthographic projection of the flywheel 3 on the second projection plane, and the second projection plane is a plane perpendicular to a width direction of the housing 22.

In the embodiments of the present disclosure, the orthographic projection of the bearing 411 on the second projection plane is separated from the orthographic projection of the flywheel 3 on the second projection plane, which is beneficial for the driving motor 4 to overlap with the flywheel 3 and the engine in a width direction of the power system according to the present disclosure, such that the width of the power system according to the present disclosure can be reduced.

In the embodiments of the present disclosure, the width direction of the power system is consistent with the width direction of the housing 22.

In the embodiments of the present disclosure, the bearing 411 may support the first input shaft 41 for rotation. An inner ring of the bearing 411 is connected to the first input shaft 41, and an outer ring of the bearing 411 may be connected to other components, such that the first input shaft 41 may rotate under the drive of the driving motor 4.

In some embodiments of the present disclosure, as shown in FIG. 4, the power system includes a second input shaft 51 and a second input gear 52. Both the second input gear 52 and the flywheel 3 are sleeved on the second input shaft 51 and drivingly connected to the second input shaft 51. The second input gear 52 meshes with the second reduction gear 121.

In the embodiments of the present disclosure, the flywheel 3 is drivingly connected to the second input shaft 51 and may drive the second input shaft 51 to rotate, such that the engine can be driven to start through the second input shaft 51.

In the embodiments of the present disclosure, the second input shaft 51 meshes with the second reduction gear 121 through the second input gear 52, and may drive the second reduction gear 121 to rotate and in turn drive the differential 2 to rotate. The second reduction gear 121 may also reduce the rotational speed transmitted by the second section 12 to the differential 2, such that the torque applied to the differential 2 can be increased to drive the wheels 9 and the half shafts 8 to rotate.

In the embodiments of the present disclosure, the second input shaft 51 may serve as a crankshaft of the engine to rotate under the drive of a piston, may also be drivingly connected to the crankshaft by a coupling and other structures, and in turn is driven by the piston.

In the embodiments of the present disclosure, the second input shaft 51 and the second input gear 52 may be connected through an integrated molding process, for example, molded through casting to transmit power from the engine, and may also be connected through a key connection and the like to transmit power from the engine. The integrated molding process may also be welding or extrusion molding.

In some embodiments of the present disclosure, as shown in FIG. 4, the power system includes a generator 6. The generator 6 is drivingly connected to the second input shaft 51.

In the embodiments of the present disclosure, the second input shaft 51 is drivingly connected to the generator 6, which is beneficial for the second input shaft 51 to output kinetic energy to the generator 6, such that the generator 6 can generate electricity for other components to operate.

In the embodiments of the present disclosure, the generator 6 may be directly drivingly connected to the second input shaft 51 through structures such as a key or a coupling, and rotate under the drive of the second input shaft 51 to generate electricity. The generator 6 may also be drivingly connected to the second input shaft by an intermediate component, and rotate under the drive of the second input shaft 51 to generate electricity.

In the embodiments of the present disclosure, the generator 6 may be electrically connected with the driving motor 4 and in turn directly applies electrical energy generated by power generation to the driving motor 4, such that the driving motor 4 can drive the differential 2 to operate.

In the embodiments of the present disclosure, the electrical energy generated by the generator 6 may also be stored in a power supply for other components to draw power during operation.

Persons of ordinary skill in the art can understand that all or part of the steps described in the above embodiments can be completed through hardware, or through relevant hardware instructed by a program. The program is stored in a computer-readable storage medium, such as a read-only memory (ROM), a magnetic disk, or an optical disk (CD).

Described above are merely preferred embodiments of the present disclosure, and are not intended to limit the present disclosure. Any modifications, equivalent replacements, improvements, and the like made within the spirit and principles of the present disclosure should be included within the protection scope of the present disclosure.

## Claims

1. A power system, comprising a reduction shaft (1), a differential (2), a flywheel (3), and a driving motor (4), wherein
the reduction shaft (1) and the differential (2) are disposed on a same side of the flywheel (3);
the reduction shaft (1) comprises a first section (11) and a second section (12), wherein the first section (11) is connected to the second section (12), the driving motor (4) and the flywheel (3) are drivingly connected to the first section (11), and the first section (11) is farther from the driving motor (4) than the second section (12); and
the differential (2) comprises a first output gear (21) and a housing (22), wherein the first output gear (21) is drivingly connected to the housing (22) and the second section (12), and an orthographic projection of one end of the housing (22) on a first projection plane is within an orthographic projection of the flywheel (3) on the first projection plane, the first projection plane being a plane perpendicular to a length direction of the housing (22).

2. The power system according to claim 1, wherein the first section (11) is provided with a first reduction gear (111), and the second section (12) is provided with a second reduction gear (121), wherein the first reduction gear (111) is drivingly connected to the driving motor (4) and the flywheel (3), respectively, and the second reduction gear (121) meshes with the first output gear (21).

3. The power system according to claim 2, wherein the driving motor (4) comprises a first input shaft (41) and a first input gear (42), wherein the first input gear (42) is sleeved on the first input shaft (41) and drivingly connected to the first input shaft (41), and the first input gear (42) meshes with the first reduction gear (111).

4. The power system according to claim 3, wherein the first input shaft (41) is provided with a bearing (411), wherein the bearing (411) is sleeved on the first input shaft (41), and an orthographic projection of the bearing (411) on a second projection plane is separated from an orthographic projection of the flywheel (3) on the second projection plane, the second projection plane being a plane perpendicular to a width direction of the housing (22).

5. The power system according to claim 2, comprising a second input shaft (51) and a second input gear (52), wherein both the second input gear (52) and the flywheel (3) are sleeved on the second input shaft (51) and drivingly connected to the second input shaft (51), and the second input gear (52) meshes with the second reduction gear (121).

6. The power system according to claim 5, comprising a generator (6), wherein the generator (6) is drivingly connected to the second input shaft (51).

7. The power system according to claim 6, wherein the generator (6) is provided with a second output gear (61), and the power system comprises a third input gear (53), wherein the third input gear (53) is sleeved on the second input shaft (51) and drivingly connected to the second input shaft (51), and the third input gear (53) meshes with the second output gear (61).

8. The power system according to claim 7, comprising a clutch (7), wherein the second input gear (52) is capable of rotating relative to the second input shaft (51), the second input shaft (51) is capable of driving the third input gear (53) to rotate, and the clutch (7) connects the second input gear (52) and the third input gear (53).

9. The power system according to claim 1, wherein an orthographic projection of the flywheel (3) on a third projection plane partially overlaps with an orthographic projection of the reduction shaft (1) on the third projection plane, the third projection plane being a plane perpendicular to a width direction of the housing (22).

10. A vehicle, comprising a power system, wherein the power system comprises a reduction shaft (1), a differential (2), a flywheel (3), and a driving motor (4), wherein
the reduction shaft (1) and the differential (2) are disposed on a same side of the flywheel (3);
the reduction shaft (1) comprises a first section (11) and a second section (12), wherein the first section (11) is connected to the second section (12), the driving motor (4) and the flywheel (3) are drivingly connected to the first section (11), and the first section (11) is farther from the driving motor (4) than the second section (12); and
the differential (2) comprises a first output gear (21) and a housing (22), wherein the first output gear (21) is drivingly connected to the housing (22) and the second section (12), and an orthographic projection of one end of the housing (22) on a first projection plane is within an orthographic projection of the flywheel (3) on the first projection plane, the first projection plane being a plane perpendicular to a length direction of the housing (22).

11. The vehicle according to claim 10, wherein the first section (11) is provided with a first reduction gear (111), and the second section (12) is provided with a second reduction gear (121), wherein the first reduction gear (111) is drivingly connected to the driving motor (4) and the flywheel (3), respectively, and the second reduction gear (121) meshes with the first output gear (21).

12. The vehicle according to claim 11, wherein the driving motor (4) comprises a first input shaft (41) and a first input gear (42), wherein the first input gear (42) is sleeved on the first input shaft (41) and drivingly connected to the first input shaft (41), and the first input gear (42) meshes with the first reduction gear (111).

13. The vehicle according to claim 12, wherein the first input shaft (41) is provided with a bearing (411), wherein the bearing (411) is sleeved on the first input shaft (41), and an orthographic projection of the bearing (411) on a second projection plane is separated from an orthographic projection of the flywheel (3) on the second projection plane, the second projection plane being a plane perpendicular to a width direction of the housing (22).

14. The vehicle according to claim 11, wherein the power system comprises a second input shaft (51) and a second input gear (52), wherein both the second input gear (52) and the flywheel (3) are sleeved on the second input shaft (51) and drivingly connected to the second input shaft (51), and the second input gear (52) meshes with the second reduction gear (121).

15. The vehicle according to claim 14, wherein the power system comprises a generator (6), wherein the generator (6) is drivingly connected to the second input shaft (51).
